# FASCICULE DE BREVET EUROPEEN

(11) **EP 1 177 032 B1**
(45) Date de publication et mention de la délivrance du brevet: **04.08.2004**
(21) Numéro de dépôt: 00920854.7
(22) Date de dépôt: 20.04.2000
(51) Int. Cl.: B01D 53/94, B01J 23/34

(54) **DISPOSITIF D'EPURATION DES GAZ D'ECHAPPEMENT POUR MOTEUR A COMBUSTION INTERNE**
VORRICHTUNG ZUR ABGASREINIGUNG EINER BRENNKRAFTMASCHINE
DEVICE FOR PURIFYING EXHAUST GASES FOR AN INTERNAL COMBUSTION ENGINE

(30) Priorité: 07.05.1999 FR 9905843
(43) Date de publication de la demande: 06.02.2002
(73) Titulaire: Renault s.a.s., 92100 Boulogne Billancourt (FR); RHODIA CHIMIE, 92408 Courbevoie Cédex (FR); Ecia Equipements et composants pour l'Industrie Automobile, 92100 Boulogne Billancourt (FR)
(72) Inventeur: BERT, Christian, F-91360 Epinay s/Orge (FR); GUYON, Marc, F-91290 Arpajon (FR); MORAL, Najat, F-91240 St Michel sur Orge (FR); BIRCHEM, Thierry, F-75116 Paris (FR); FRITZ, Arno, F-75005 Paris (FR); HEDOUIN, Catherine, F-60270 Gouvieux (FR); SEGUELONG, Thierry, F-92800 Puteaux (FR); BOULY, Christophe, F-25700 Valentigney (FR); PONTIER, Thierry, F-25200 Montbeliard (FR); SARDA, Christian, F-25230 Dasle (FR)
(74) Mandataire: Srour, Elie
(86) Numéro de dépôt international: PCT/FR2000/001038
(87) Numéro de publication internationale: WO 2000/067881

(56) Documents cités:
- EP-A- 0 764 460
- FR-A- 2 738 756
- US-A- 5 362 463
- US-A- 5 656 244

## Description

La présente invention concerne un dispositif d'épuration des gaz d'échappement d'un moteur à combustion interne et plus particulièrement un dispositif d'épuration des gaz d'échappement comprenant des moyens adsorbant les oxydes d'azote ou NOx, encore appelés piège à NOx, et un pot catalytique trois voies encore appelé trifonctionnel disposé en aval du piège à NOx.

L'industrie automobile confrontée à la nécessité de réduire la consommation des véhicules cherche à développer des moteurs à combustion interne capables de produire une combustion avec des rapports air-carburant pauvres (inférieurs au rapport stoechiométrique). De tels moteurs lors qu'ils fonctionnent avec des mélanges carburés pauvres sont, en effet, aptes à réduire la consommation de carburant et à limiter les dégagements de CO₂ dans les gaz d'échappement.

De tels moteurs présentent toutefois l'inconvénient, lorsqu'ils fonctionnent en mélange pauvre, de générer des oxydes d'azote ou NOx, NOx qu'il est impératif d'épurer avant de rejeter les gaz d'échappement à l'atmosphère. Or les systèmes traditionnels de pot catalytique à "trois voies" requièrent des proportions très strictes entre les agents oxydants et les agents réducteurs et ne peuvent donc traiter par conversions catalytiques les NOx des gaz d'échappement lorsque ces derniers présentent un excès d'oxygène.

Pour résoudre ce problème, on a développé des dispositifs d'épuration des gaz d'échappement comportant des pièges à NOx (ou NOx trap en anglais). Le principe de ces dispositifs, cf. notamment celui décrit dans le brevet EP560991, est d'adsorber les NOx produits lors du fonctionnement du moteur en mélange pauvre.

Cette adsorption des NOx est obtenue en faisant traverser un monolithe imprégné de substances adsorbantes par le flux des gaz d'échappement s'échappant des chambres de combustion. Ces substances sont principalement formées d'éléments alcalins ou alcalino-terreux. Les oxydes d'azote NOx, préalablement oxydés en NO₂ par des substances catalytiques appropriées tel que le platine, sont adsorbés à la surface des éléments alcalins ou alcalino-terreux par formation de nitrates.

La capacité et la durée de stockage sont forcement limitées, ce qui impose d'effectuer périodiquement des régénérations, couramment appelées purges. Elles ont pour double objectif de libérer les NOx ainsi piégés et de réduire les oxydes d'azote préalablement en composés non polluants (azote).

Cette étape de purge se déroule grâce à une stratégie moteur adaptée permettant de générer un milieu à faible teneur en oxygène et contenant des quantités importantes d'agents réducteurs (CO, H₂ ou HC). La réduction des NOx est alors assurée par l'ajout d'une fonction réductrice, souvent à base de platine ou de rhodium, sur le monolithe.

De tels dispositifs d'épuration des gaz d'échappement, s'ils permettent bien d'obtenir des efficacités compatibles avec les niveaux nécessaires pour atteindre les normes législatives, par un fonctionnement adapté des alternances entre les phases d'adsorption et les phases dites de régénération, présentent un certain nombre d'inconvénients.

Ils requièrent en effet, des niveaux élevés de métaux précieux puisque ces métaux précieux participent à la fois aux réactions de stockage des NOx et à leur réduction, ils sont donc très chers à fabriquer.

Par ailleurs, les pièges à NOx actuels sont très sensibles à un empoisonnement par le dioxyde de soufre SO2 (issu du soufre initialement présent dans le carburant). En effet, les oxydes de soufre se substituent du fait de la présence des catalyseurs d'oxydation, par un procédé très similaire à celui responsable de la formation de nitrates, aux oxydes de NOx à la surface des éléments alcalins et alcalino-terreux. L'activité de piégeage diminue alors graduellement au cours du temps et il est nécessaire de développer des stratégies de purge du soufre, stratégies fortement consommatrices d'agents réducteurs et en particulier de carburant.

La présente invention a donc pour objet de remédier à ces inconvénients en développant un dispositif d'épuration des gaz d'échappement qui assure tout à la fois le traitement des NOx produits par le fonctionnement d'un moteur en mélange pauvre et qui soit peu coûteux et peu sensible à l'empoisonnement par le soufre.

Le dispositif d'épuration des gaz d'échappement d'un moteur à combustion interne selon l'invention comprend un moteur à combustion interne pouvant effectuer la combustion d'un carburant avec des rapports air-carburant pauvres et des moyens adsorbant les NOx installés dans la ligne d'échappement du moteur, ces moyens étant du type qui adsorbent les NOx présents dans les gaz d'échappement en présence d'un excès d'oxygène et qui libèrent les NOx adsorbés lorsque la concentration en oxygène des gaz d'échappement diminue.

Selon l'invention, le dispositif d'épuration est caractérisé en ce que d'une part les moyens adsorbant les NOx ne comportent aucune composition apte à servir de catalyseur de réduction des NOx et en particulier aucun métal précieux et en ce que d'autre part, un catalyseur trois voies est installé dans la ligne d'échappement en aval des moyens adsorbant les NOx.

L'objet de l'invention est donc également la mise au point de compositions qui peuvent être utilisées pour réaliser des pièges à NOx sans utiliser de métaux précieux.

On comprendra mieux les buts, aspects et avantages de la présente invention, d'après la description donnée ci-après de différents modes de réalisation de l'invention, donnés à titre d'exemples non limitatifs, en se référant aux dessins annexés, dans lesquels :

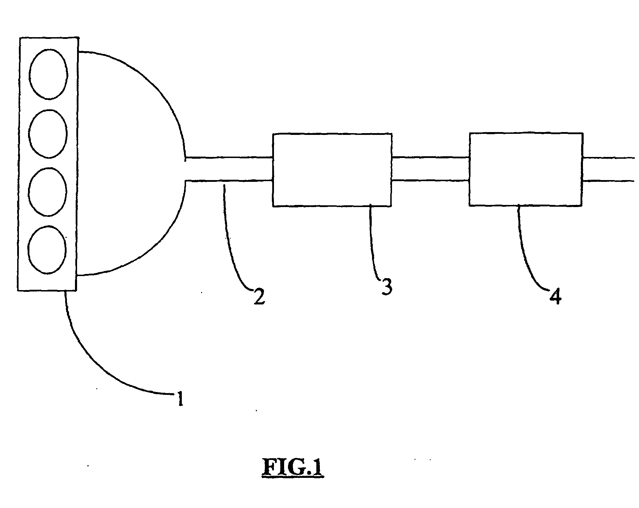

- la figure 1 est une représentation schématique d'un moteur à combustion interne équipé d'un dispositif d'épuration des gaz d'échappement objet de la présente invention.

En se reportant à la figure 1, on a représenté un moteur à combustion interne, référence 1, de type multicylindre. Ce moteur qui peut être aussi bien à allumage commandé qu'à allumage par compression, est muni d'un système électronique d'injection de carburant non figuré. Ce dispositif permet de piloter notamment la richesse du mélange carburé et donc celle des gaz d'échappement en fonction de stratégies adaptées.

La ligne d'échappement 2 du moteur est munie de l'amont vers l'aval dans le sens d'écoulement des gaz d'échappement, d'un piège à NOx 3 et d'un catalyseur trois voies 4.

Le piège à NOx 3 est selon l'invention caractérisé en ce qu'il ne présente aucune efficacité catalytique de réduction. Ainsi, la seule fonction de ce piège est de piéger les NOx émis lors d'un fonctionnement en mélange pauvre du moteur et une fois plein, de relâcher ces derniers lors d'un fonctionnement en mélange riche.

Les oxydes d'azotes ainsi libérés sont alors réduits lors de la traversée du pot catalytique trois voies 4 situé en aval.

Pour réaliser le piège à NOx objet de la présente invention, différentes formulations ont été isolées, toutes reposent sur l'utilisation d'un support à base d'au moins un oxyde choisi parmi les oxydes de cérium, de zirconium, de scandium ou de terres rares et une phase active à base de manganèse.

Par terre rare on entend, ici et pour l'ensemble de la description, les éléments du groupe constitué par l'yttrium et les éléments de la classification périodique de numéro atomique compris inclusivement entre 57 et 71.

La terre rare peut être plus particulièrement choisie parmi le lanthane, le cérium, le praséodyme, le néodyme, l'europium, le samarium, le gadolinium ou le terbium.

Le support est à base d'un oxyde de cérium, d'un oxyde de zirconium et d'un oxyde de scandium ou de terre rare autre que le cérium. On souligne ici et pour l'ensemble de la description que l'invention s'applique aussi à tout support à base d'oxyde de cérium, d'oxyde de zirconium et, à titre de troisième élément, d'une combinaison de deux ou plusieurs oxydes choisis parmi l'oxyde de scandium et les oxydes de terres rares.

On utilise de préférence comme supports ceux pour lesquels la proportion atomique cérium/zirconium est d'au moins 1.

Comme terre rare rentrant dans la composition du support, on peut mentionner plus particulièrement le lanthane, le néodyme et le praséodyme.

On peut aussi utiliser plus particulièrement les supports répondant à la formule globale CeₓZr_{y}M_{z}O₂ où M représente au moins un élément choisi dans le groupe comprenant le scandium et les terres rares autres que le cérium et où x, y et z vérifient les relations 0< z ≤0,3, 1≤ x/y ≤19 et x+y+z=1.

Plus particulièrement, x, y et z peuvent vérifier les relations suivantes 0,02≤ z ≤0,2, 1≤ x/y ≤9, ce dernier rapport pouvant être encore plus particulièrement compris entre 1,5 et 4, ces bornes étant incluses.

Selon une variante le support se présente sous forme d'une solution solide. Dans ce cas, les spectres en diffraction X du support révèlent au sein de ce dernier l'existence d'une seule phase homogène. Pour les supports les plus riches en cérium, cette phase correspond en fait à celle d'un oxyde cérique CeO₂ cristallisé et dont les paramètres de mailles sont plus ou moins décalés par rapport à un oxyde cérique pur, traduisant ainsi l'incorporation du zirconium et de l'autre élément (scandium et terres rares autres que le cérium) dans le réseau cristallin de l'oxyde de cérium, et donc l'obtention d'une solution solide vraie.

On entend par surface spécifique, la surface spécifique B.E.T. déterminée par adsorption d'azote conformément à la norme ASTM D 3663-78 établie à partir de la méthode BRUNAUER - EMMETT- TELLER décrite dans le périodique "The Journal of the American Society, 60, 309 (1938)".

Ainsi, on peut utiliser des supports présentant une surface spécifique après calcination 6 heures à 900°C d'au moins 35m²/g. Cette surface peut être plus particulièrement d'au moins 40m²/g. Elle peut être encore plus particulièrement d'au moins 45m²/g.

Ces supports peuvent aussi présenter des surfaces qui restent encore importantes même après calcination 6 heures à 1000°C. Ces surfaces peuvent être d'au moins 14m²/g, plus particulièrement d'au moins 20m²/g et encore plus particulièrement d'au moins 30m²/g.

Une autre caractéristique des supports est leur capacité de stockage de l'oxygène. Cette capacité mesurée à 400°C est d'au moins 1,5ml d'O₂/g. Elle peut être plus particulièrement d'au moins 1,8ml d'O₂/g et encore plus particulièrement d'au moins 2ml d'O₂/g. Dans les meilleurs cas, cette capacité peut être d'au moins 2,5ml d'O₂/g. Cette capacité est déterminée par un test qui évalue la capacité du support ou du produit à successivement oxyder des quantités injectées de monoxyde de carbone d'oxygène et à consommer des quantités injectées d'oxygène pour réoxyder le produit. La méthode employée est dite alternée.

Le gaz porteur est de l'hélium pur à un débit de 10l/h. Les injections se font par l'intermédiaire de boucle contenant 16ml de gaz. Les quantités injectées de CO sont effectués en utilisant un mélange gazeux contenant 5% de CO dilué dans l'hélium tandis que les quantités injectées d'O₂ se font à partir d'un mélange gazeux contenant 2,5% d'O₂ dilué dans l'hélium. L'analyse des gaz est effectuée par chromatographie à l'aide d'un détecteur de conductivité thermique.

La quantité d'oxygène consommée permet de déterminer la capacité de stockage d'oxygène. La valeur caractéristique du pouvoir de stockage d'oxygène est exprimée en ml d'oxygène (dans les conditions normales de température et de pression) par gramme de produit introduit et elle est mesurée à 400°C. Les mesures de' capacité de stockage d'oxygène données ici et dans le reste de la description sont faites sur des produits prétraités à 900°C sous air pendant 6 heures dans un four à moufle.

Les supports de la composition de l'invention peuvent être préparés de manière connue. Ils peuvent ainsi être obtenus à partir d'une réaction solide/solide des oxydes ou de tout autre précurseur comme des carbonates. Ils peuvent être aussi préparés par voie humide, c'est à dire par précipitation avec une base des sels de cérium, de zirconium et du ou des troisièmes éléments, puis calcination.

Dans le cas de la variante mettant en oeuvre des supports définis par leurs surfaces spécifiques et leur capacité de stockage de l'oxygène, le support peut être obtenu par un procédé dans lequel on prépare un mélange en milieu liquide contenant un composé du cérium, un composé de scandium ou de terre rare et une solution de zirconium qui est telle que la quantité de base nécessaire pour atteindre le point équivalent lors d'un dosage acide-base de cette solution vérifie la condition rapport molaire OH⁻/Zr ≤ 1,65; on chauffe ledit mélange; on récupère le précipité obtenu et on calcine ce précipité.

Les compositions de l'invention telles que décrites plus haut se présentent sous forme de poudres destinées à revêtir un support tel qu'un monolithe, mais elles peuvent éventuellement être mises en forme pour se présenter directement sous forme de granulés, billes, cylindres ou nids d'abeille de dimensions variables.

Selon le mode de réalisation du piège à NOx objet de la présente invention, on peut utiliser comme composition pour réaliser le piège à Nox, deux compositions dont les phases actives sont à base de manganèse et d'un autre élément choisi parmi les alcalins, les alcalino-terreux et les terres rares et son utilisation dans le traitement des gaz d'échappement.

L'objet de ce mode de réalisation l'invention est donc la mise au point d'un composé qui peut être utilisé dans une plus large gamme de températures et, éventuellement, en l'absence de métal précieux.

Dans ce but, la composition objet de l'invention, utilisable comme piège à NOx, est caractérisé en ce qu'il comprend une association :
- d'une première composition comprenant un support et une phase active, la phase active étant à base de manganèse et d'au moins un autre élément A choisi parmi les alcalins et les alcalino-terreux, le manganèse et l'élément A étant chimiquement liés;
- d'une seconde composition comprenant un support et une phase active à base de manganèse et d'au moins un autre élément B choisi parmi les alcalins, les alcalino-terreux et les terres rares, cette seconde composition présentant ou étant susceptible de présenter une surface spécifique d'au moins 80m²/g après calcination 8 heures à 800°C.

La composition objet du mode de réalisation se caractérise par l'association de deux compositions spécifiques qui vont maintenant être décrites plus particulièrement.

Ces compositions comprennent un support et une phase active avec les sens donnés précédemment. La première composition est décrite ci-dessous.

Cette composition comprend une phase active qui est à base de manganèse et d'au moins un autre élément A choisi parmi les alcalins et les alcalino-terreux. Comme élément alcalin, on peut citer plus particulièrement le sodium et le potassium. Comme élément alcalino-terreux, on peut mentionner notamment le baryum. Comme la composition peut comprendre un ou plusieurs éléments A, toute référence dans la suite de la description à l'élément A devra donc être comprise comme pouvant s'appliquer aussi au cas où il y aurait plusieurs éléments A.

Par ailleurs, les éléments manganèse et A sont présents dans cette première composition sous une forme chimiquement liée. On entend par là qu'il y a des liaisons chimiques entre le manganèse et l'élément A résultant d'une réaction entre eux, ces deux éléments n'étant pas simplement juxtaposés comme dans un simple mélange. Ainsi, les éléments manganèse et A peuvent être présents sous la forme d'un composé ou d'une phase de type oxyde mixte. Ce composé ou cette phase peuvent notamment être représentés par la formule AₓMn_{y}O_{2-d} (1) dans laquelle 0,5<y/x<6. Comme phase ou composé de formule (1) on peut citer à titre d'exemple ceux du type vernadite, hollandite, romanéchite ou psilomélane, birnessite, todorokite, buserite ou lithiophorite. Le composé peut être éventuellement hydraté. Le composé peut par ailleurs avoir une structure lamellaire de type CdI₂. La formule (1) est donnée ici à titre illustratif, on ne sortirait pas du cadre de la présente invention si le composé présentait une formule différente dans la mesure bien entendu où le manganèse et l'élément A seraient bien chimiquement liés.

L'analyse par RX ou par microscopie électronique permet de mettre en évidence la présence d'un tel composé.

Le degré d'oxydation du manganèse peut varier entre 2 et 7 et, plus particulièrement entre 3 et 7.

Dans le cas du potassium, cet élément et le manganèse peuvent être présents sous la forme d'un composé de type K₂Mn₄O₈. Dans le cas du baryum, il peut s'agir d'un composé de type BaMnO₃.

La première composition comprend en outre un support. Comme support, on peut mettre en oeuvre tout support poreux utilisable dans le domaine de la catalyse. Il est préférable que ce support présente une inertie chimique vis à vis des éléments manganèse et A suffisante pour éviter une réaction substantielle d'un ou de ces éléments avec le support qui serait susceptible de gêner la création d'une liaison chimique entre le manganèse et l'élément A. Toutefois, dans le cas d'une réaction entre le support et ces éléments, il est possible de mettre en oeuvre des quantités plus importantes de manganèse et d'élément A pour obtenir la liaison chimique recherchée entre ces éléments.

Plus particulièrement, le support est à base d'un oxyde choisi parmi l'oxyde de cérium, l'oxyde de zirconium ou leurs mélanges.

On peut mentionner notamment pour les mélanges d'oxyde de cérium et d'oxyde de zirconium ceux décrits dans les demandes de brevets EP-A- 605274 et EP-A-735984 . On peut plus particulièrement utiliser les supports à base d'oxyde de cérium et de zirconium dans lesquels ces oxydes sont présents dans une proportion atomique cérium/zirconium d'au moins 1. Pour ces mêmes supports, on peut aussi utiliser ceux qui se présentent sous forme d'une solution solide. Dans ce cas, les spectres en diffraction X du support révèlent au sein de ce dernier l'existence d'une seule phase homogène. Pour les supports les plus riches en cérium, cette phase correspond en fait à celle d'un oxyde cérique CeO₂ cubique cristallisé et dont les paramètres de mailles sont plus ou moins décalés par rapport à un oxyde cérique pur, traduisant ainsi l'incorporation du zirconium dans le réseau cristallin de l'oxyde de cérium, et donc l'obtention d'une solution solide vraie.

On peut encore mentionner pour les mélanges d'oxyde de cérium et d'oxyde de zirconium à base de ces deux oxydes et en outre d'oxyde de scandium ou d'une terre rare autre que le cérium, et notamment ceux décrits dans la demande de brevet WO 97/43214. Cette demande décrit en particulier des compositions à base d'un oxyde de cérium, d'un oxyde de zirconium et d'un oxyde d'yttrium, ou encore, outre l'oxyde de cérium et l'oxyde de zirconium à base d'au moins un autre oxyde choisi parmi l'oxyde de scandium et les oxydes de terres rares à l'exception du cérium, dans une proportion atomique cérium/zirconium d'au moins 1. Ces compositions présentent une surface spécifique après calcination 6 heures à 900°C d'au moins 35m²/g et une capacité de stockage de l'oxygène à 400°C d'au moins 1,5ml d'O₂/g.

Selon une variante de ce troisième mode de réalisation de l'invention, le support est à base d'oxyde de cérium et il comprend en outre de la silice. Des supports de ce type sont décrits dans les demandes de brevets EP-A-207857 et EP-A-547924.

La teneur totale en manganèse, alcalin, et alcalino-terreux peut varier dans de larges proportions. La teneur minimale est celle en deçà de laquelle on n'observe plus d'activité d'adsorption des NOx. Cette teneur peut être comprise notamment entre 2 et 50%, plus particulièrement entre 5 et 30%, cette teneur étant exprimée en % atomique par rapport à la somme des moles d'oxyde(s) du support et des éléments concernés de la phase active. Les teneurs respectives en manganèse, alcalin, et alcalino-terreux peuvent aussi varier dans de larges proportions, la teneur en manganèse peut être notamment égale ou voisine de celle en alcalin ou alcalino-terreux.

On peut préparer la première composition du composé objet du troisième mode de réalisation de l'invention par un procédé dans lequel on met en contact le support avec le manganèse et au moins un autre élément A ou avec des précurseurs du manganèse et d'au moins un autre élément A et où on calcine l'ensemble à une température suffisante pour créer une liaison chimique entre le manganèse et l'élément A.

Une méthode utilisable pour la mise en contact précitée est l'imprégnation. On forme ainsi tout d'abord une solution ou une barbotine de sels ou de composés des éléments de la phase supportée.

A titre de sels, on peut choisir les sels d'acides inorganiques comme les nitrates, les sulfates ou les chlorures.

On peut aussi utiliser les sels d'acides organiques et notamment les sels d'acides carboxyliques aliphatiques saturés ou les sels d'acides hydroxycarboxyliques. A titre d'exemples, on peut citer les formiates, acétates, propionates, oxalates ou les citrates.

On imprègne ensuite le support avec la solution ou la barbotine.

On utilise plus particulièrement l'imprégnation à sec. L'imprégnation à sec consiste à ajouter au produit à imprégner un volume d'une solution aqueuse de l'élément qui est égal au volume poreux du solide à imprégner.

Il peut être avantageux d'effectuer le dépôt des éléments de la phase active en deux étapes. Ainsi, on peut avantageusement déposer le manganèse dans un premier temps puis l'élément A dans un deuxième.

Après imprégnation, le support est éventuellement séché puis il est calciné. Il est à noter qu'il est possible d'utiliser un support qui n'a pas encore été calciné préalablement à l'imprégnation.

Le dépôt de la phase active peut aussi se faire par atomisation d'une suspension à base de sels ou de composés des éléments de la phase active et du support. On calcine ensuite le produit atomisé ainsi obtenu.

La calcination se fait, comme indiqué plus haut, à une température suffisante pour créer une liaison chimique entre le manganèse et l'élément A. Cette température varie suivant la nature de l'élément A mais, dans le cas d'une calcination sous air, elle est généralement d'au moins 600°C plus particulièrement d'au moins 700°C, elle peut être notamment comprise entre 800°C et 850°C. Des températures supérieures ne sont généralement pas nécessaires dans la mesure où la liaison chimique entre le manganèse et l'élément A est déjà formée mais par contre elles peuvent entraîner une diminution de la surface spécifique du support susceptible de diminuer les propriétés catalytiques de la composition. La durée de la calcination dépend notamment de la température et elle est fixée aussi de manière à être suffisante pour créer une liaison chimique des éléments.

La seconde composition du composé objet du troisième mode de réalisation de l'invention va maintenant être décrite.

Cette composition comporte aussi un support et une phase active.

Ce qui a été dit plus haut au sujet de la phase active de la première composition s'applique aussi ici, notamment en ce qui concerne la nature des éléments de cette phase et leur quantité. Ainsi, l'élément B peut être plus particulièrement le sodium, le potassium ou le baryum.

La phase active de la seconde composition peut être aussi à base de manganèse et d'au moins une terre rare. Cette terre rare peut être plus particulièrement choisie parmi le cérium, le terbium, le gadolinium, le samarium, le néodyme et le praséodyme. La teneur totale en manganèse, alcalin, alcalino-terreux ou en terre rare peut varier entre 1 et 50%, plus particulièrement entre 5 et 30%. Cette teneur est exprimée en % atomique par rapport à la somme des moles d'oxyde(s) du support et des éléments concernés de la phase supportée. Les teneurs respectives en manganèse, alcalin, alcalino-terreux ou en terres rares peuvent aussi varier dans de larges proportions, la teneur en manganèse peut être notamment égale à, ou proche de celle en élément B.

Comme indiqué plus haut, une caractéristique de la seconde composition est qu'elle présente ou est susceptible de présenter une surface spécifique d'au moins 80m²/g après calcination 8 heures à 800°C. Plus particulièrement, cette surface spécifique est d'au moins 100m²/g après calcination 8 heures à 800°C.

Cette caractéristique de surface est obtenue par le choix d'un support convenable, présentant notamment une surface spécifique suffisamment élevée.

Ce support peut être à base d'alumine. On peut utiliser ici tout type d'alumine susceptible de présenter une surface spécifique suffisante pour une application en catalyse. On peut mentionner les alumines issues de la déshydratation rapide d'au moins un hydroxyde d'aluminium, tel que la bayerite, l'hydrargillite ou gibbsite, la nordstrandite, et/ou d'au moins un oxyhydroxyde d'aluminium tel que la boehmite, la pseudoboehmite et le diaspore.

Selon une variante de réalisation, on utilise une alumine stabilisée. Comme élément stabilisant on peut citer les terres rares, le baryum, le silicium et le zirconium. Comme terre rare on peut mentionner tout particulièrement le cérium, le lanthane ou le mélange lanthane-néodyme.

La préparation de l'alumine stabilisée se fait d'une manière connue en soi, notamment par imprégnation de l'alumine par des solutions de sels, comme les nitrates, des éléments stabilisants précités ou encore par coséchage d'un précurseur d'alumine et de sels de ces éléments puis calcination.

On peut citer par ailleurs une autre préparation de l'alumine stabilisée dans laquelle la poudre d'alumine issue de la déshydratation rapide d'un hydroxyde ou d'un oxyhydroxyde d'aluminium est soumise à une opération de mûrissement en présence d'un agent stabilisant constitué par un composé du lanthane et, éventuellement, un composé du néodyme, ce composé pouvant être plus particulièrement un sel. Le mûrissement peut se faire par mise en suspension de l'alumine dans l'eau puis chauffage à une température comprise par exemple entre 70 et 110°C. Après le mûrissement, l'alumine est soumise à un traitement thermique.

Une autre préparation consiste en un type de traitement similaire mais avec le baryum.

La teneur en stabilisant exprimée en poids d'oxyde de stabilisant par rapport à l'alumine stabilisée est comprise généralement entre 1,5 et 15%, plus particulièrement entre 2,5 et 11%.

Le support peut aussi être à base de silice.

Il peut aussi être à base de silice et d'oxyde de titane dans une proportion atomique Ti/Ti+Si comprise entre 0,1 et 15%. Cette proportion peut être plus particulièrement comprise entre 0,1 et 10%. Un tel support est décrit notamment dans la demande de brevet WO 99/01216.

Comme autre support convenable, on peut utiliser ceux à base d'oxyde de cérium et d'oxyde de zirconium, ces oxydes pouvant se présenter sous la forme d'un oxyde mixte ou d'une solution solide de l'oxyde de zirconium dans l'oxyde de cérium ou réciproquement. Ces supports sont obtenus par un premier type de procédé qui comprend une étape dans laquelle on forme un mélange comprenant de l'oxyde de zirconium et de l'oxyde de cérium et on lave ou on imprègne le mélange ainsi formé par un composé alcoxylé ayant un nombre d'atomes de carbone supérieur à 2. Le mélange imprégné est ensuite calciné.

Le composé alcoxylé peut être choisi notamment parmi les produits de formule (2) R₁-((CH₂)ₓ-O)ₙ-R₂ dans laquelle R₁ et R₂ représentent des groupes alkyles linéaires ou non, ou H ou OH ou Cl ou Br ou I; n est un nombre compris entre 1 et 100; et x est un nombre compris entre 1 et 4, ou encore ceux de formule (3) (R₃,R₄)-v - ((CH₂)ₓ-O)ₙ-OH dans laquelle v désigne un cycle benzénique, R₃ et R₄ sont des substituants identiques ou différents de ce cycle et représentent l'hydrogène ou des groupes alkyles linéaires ou non ayant de 1 à 20 atomes de carbone, x et n étant définis comme précédemment; ou encore ceux de formule (4) R₄O-((CH₂)ₓ-O)ₙ-H où R4 représente un groupe alcool linéaire ou non, ayant de 1 à 20 atomes de carbone; x et n étant définis comme précédemment; et ceux de formule (5) R₅-S-((CH₂)ₓ-O)ₙ-H où R₅ représente un groupe alkyle linéaire ou non ayant de 1 à 20 atomes de carbone, x et n étant définis comme précédemment. On pourra se référer pour ces produits à la demande de brevet WO 98/16472.

Ces supports peuvent être aussi obtenus par un second type de procédé qui comprend une étape dans laquelle on fait réagir une solution d'un sel de cérium, une solution d'un sel de zirconium et un additif choisi parmi les tensioactifs anioniques, les tensioactifs non ioniques, les polyéthylènes glycols, les acides carboxyliques et leurs sels, la réaction pouvant éventuellement avoir lieu en présence d'une base et/ou d'un agent oxydant.

Comme tensioactifs anioniques on peut utiliser plus particulièrement les carboxylates, les phosphates, les sulfates et les sulfonates. Parmi les tensioactifs non ioniques on peut utiliser de préférence les alkyl phénols éthoxylés et les amines éthoxylées.

La réaction entre les sels de zirconium et de cérium peut se faire en chauffant la solution contenant les sels, il s'agit alors d'une réaction de thermohydrolyse. Elle peut aussi se faire par précipitation en introduisant une base dans la solution contenant les sels.

On pourra se référer pour ces produits à la demande de brevet WO 98/45212.

La préparation de la seconde composition peut se faire avec les mêmes méthodes que celles qui ont été données plus haut pour la première. On notera qu'après la mise en contact du support avec les éléments de la phase active, on calcine l'ensemble à une température suffisante pour que ces éléments soient présents sous forme d'oxydes. Généralement, cette température est d'au moins 500°C, plus particulièrement d'au moins 600°C.

Le composé de l'invention tel que décrit plus haut se présente sous forme d'une poudre mais il peut éventuellement être mis en forme pour se présenter sous forme de granulés, billes, cylindres ou nids d'abeille de dimensions variables.

Selon une variante le piège à NOx selon le troisième mode de réalisation comprend un substrat et un revêtement constitué par deux couches superposées. Dans ce cas, la première couche contient la première composition du composé et la seconde couche contient la seconde composition. L'ordre des couches peut être quelconque, c'est à dire que la couche interne en contact avec le substrat peut contenir soit la première soit la seconde composition, la couche externe déposée sur la première contenant alors l'autre composition du composé.

Selon une autre variante, le composé est présent dans le revêtement sous la forme d'une couche unique qui comprend dans ce cas les deux compositions précitées, sous la forme d'un mélange, obtenu par exemple par mélange mécanique.

Une autre variante est encore envisageable. Dans ce cas, le piège à NOx comprend deux substrats juxtaposés, chaque substrat comprenant un revêtement. Le revêtement du premier substrat contient la première composition et le revêtement du second substrat contient la seconde composition.

Ainsi, grâce aux différents modes de réalisation qui viennent d'être décrits, le piège à NOx 3 est totalement exempt de métaux précieux et offre donc aucune capacité (ou une capacité extrêmement réduite) catalytique de réduction. L'ensemble piège à NOx 3 et catalyseur trifonctionnel 4 sont donc moins chers à fabriquer que les pièges à NOx imprégnés de catalyseurs connus. Par ailleurs, en l'absence de métaux précieux et de capacité catalytique, le piège à NOx ainsi réalisé présente une résistance à l'empoisonnement par le soufre particulièrement étonnante.

## Revendications

1. Dispositif d'épuration des gaz d'échappement d'un moteur à combustion interne comprenant un moteur à combustion interne pouvant effectuer la combustion d'un carburant avec des rapports air-carburant pauvres, des moyens adsorbant les NOx installés dans la ligne d'échappement du moteur, lesdits moyens étant du type qui adsorbent les NOx présents dans les gaz d'échappement en présence d'un excès d'oxygène et qui libèrent les NOx adsorbés lorsque la concentration en oxygène des gaz d'échappement diminue, et lorsque le moteur fonctionne sur mélange riche, les moyens adsorbants les NOx ne comportent aucune composition ou aucun métal précieux apte à servir de catalyseur de réduction des NOx, un catalyseur trois voies est installé dans la ligne d'échappement en aval des moyens adsorbants les NOx **caractérisé en ce que** les moyens adsorbant les NOx comprennent l'association de deux compositions distinctes ; une première composition comprenant un support et une phase active, la phase active étant à base de manganèse et d'au moins un autre élément A choisi parmi les alcalins et les alcalino-terreux, le manganèse et l'élément A étant chimiquement liés ; et une seconde composition comprenant un support et une phase active à base de manganèse et d'au moins un autre élément B choisi parmi les alcalins, les alcalino-terreux et les terres rares, cette seconde composition présentant ou étant susceptible de présenter une surface spécifique d'au moins 80m²/g après calcination 8 heures à 800°C.

2. Dispositif d'épuration des gaz d'échappement d'un moteur à combustion interne selon la revendication 1, **caractérisé en ce que** le support de la première composition à base d'un oxyde choisi parmi les oxydes de cérium, de zirconium, de scandium ou de terres rares .

3. Dispositif d'épuration des gaz d'échappement d'un moteur à combustion interne selon la revendication 1 ou 2 **caractérisé en ce que** l'alcalin est le potassium, et l'alcalino-terreux est le baryum.

4. Dispositif d'épuration des gaz d'échappement d'un moteur à combustion interne selon l'une quelconque des revendications 2 à 3, **caractérisé en ce que** la phase active de la deuxième composition comprend au moins un élément choisi parmi le terbium, le gadolinium, l'europium, le samarium, le néodyme et le praséodyme.

5. Dispositif d'épuration des gaz d'échappement d'un moteur à combustion interne selon la revendication 4 **caractérisé en ce que** la proportion atomique cérium/zirconium dans le support de la première composition est d'au moins 1.

6. Dispositif d'épuration des gaz d'échappement d'un moteur à combustion interne selon l'une quelconque des revendications 2 à 5, **caractérisé en ce que** le support de la première composition présente une surface spécifique après calcination de 6 heures à 900°C d'au moins 40m²/g.

7. Dispositif d'épuration des gaz d'échappement d'un moteur à combustion interne selon l'une quelconque des revendications 2 à 6, **caractérisé en ce que** le support de la première composition répond à la formule Cex-Zry-Mz-O2 ou M représente au moins un élément choisi dans le groupe comprenant le scandium et les terres rares autres que le cérium et où 0<z<0,30 et plus particulièrement 0,02<z<0,020, et 1<x/y<9 et plus particulièrement 1<x/y<9, et x, y et z étant liés par la relation x+y+z=1.

8. Dispositif d'épuration des gaz d'échappement d'un moteur à combustion interne selon l'une quelconque des revendications 2 à 7, **caractérisé en ce que** les terres rares entrant dans la composition du support de la première composition est le lanthane, le néodyme ou le praséodyme.

9. Dispositif d'épuration des gaz d'échappement d'un moteur à combustion interne selon la revendication 1 **caractérisé en ce que** la seconde composition présente ou est susceptible de présenter une surface spécifique d'au moins 100m²/g après calcination 8 heures à 800°C.

10. Dispositif d'épuration des gaz d'échappement d'un moteur à combustion interne selon l'une quelconque des revendications 1 à 9, **caractérisé en ce que** les éléments A et B sont choisis parmi le potassium, le sodium ou le baryum.

11. Dispositif d'épuration des gaz d'échappement d'un moteur à combustion interne selon l'une quelconque des revendications 1 à 10 **caractérisé en ce que** le support de la seconde composition est à base d'alumine ou d'alumine stabilisée par du silicium, du zirconium, du baryum ou une terre rare.

12. Dispositif d'épuration des gaz d'échappement d'un moteur à combustion interne selon l'une quelconque des revendications 1 à 10, **caractérisé en ce que** le support de la seconde composition est à base de silice.

13. Dispositif d'épuration des gaz d'échappement d'un moteur à combustion interne selon l'une quelconque des revendications 1 à 10 **caractérisé en ce que** le support de la seconde composition est à base de silice et d'oxyde de titane dans une proportion atomique Ti/Ti+Si comprise entre 0,1 et 15%.

14. Dispositif d'épuration des gaz d'échappement d'un moteur à combustion interne selon l'une quelconque des revendications 1 à 10 **caractérisé en ce que** le support de la seconde composition est à base d'oxyde de cérium et d'oxyde de zirconium.

15. Procédé de réalisation du dispositif d'épuration des gaz d'échappement d'un moteur à combustion interne selon le revendication 14 **caractérisé en ce que** le support de la seconde composition est obtenu par un procédé dans lequel on forme un mélange comprenant de l'oxyde de zirconium et de l'oxyde de cérium et on lave ou on imprègne le mélange ainsi formé par un composé alcoxylé ayant un nombre d'atomes de carbone supérieur à 2.

16. Procédé de réalisation du dispositif d'épuration des gaz d'échappement d'un moteur à combustion interne selon l'une quelconque des revendications 1 à 10 **caractérisé en ce que** le support de la seconde composition est à base d'oxyde de cérium et d'oxyde de zirconium, ce support étant obtenu par un procédé dans lequel on fait réagir une solution d'un sel de cérium, une solution d'un sel de zirconium et un additif choisi parmi les tensioactifs anioniques, les tensioactifs non ioniques, les polyéthylènes glycols, les acides carboxyliques et leurs sels, la réaction pouvant éventuellement avoir lieu en présence d'une base et/ou d'un agent oxydant.

## Patentansprüche

1. Abgasreinigungsvorrichtung eines Verbrennungsmotors, welche einen Verbrennungsmotor aufweist, welcher die Verbrennung von Kraftstoff mit mageren Verhältnissen Luft-Kraftstoff ermöglicht, Mittel, welche NOx absorbieren, die in der Abgasleitung des Motors installiert sind, wobei die Mittel von dem Typ sind, welcher die NOx absorbiert, die in den Abgasen vorhanden sind, bei Vorliegen eines Sauerstoffiiberschusses, und welche die NOx freisetzen, die absorbiert werden, wenn die Konzentration von Sauerstoff der Abgase abnimmt, und wenn der Motor bei einer reichen Mischung betrieben wird, wobei die Mittel, welche die NOx absorbieren, keine edle Zusammensetzung oder kein Edelmetall aufweisen, welches fähig ist, als Katalysator einer Reduzierung der NOx zu dienen, ein Drei-Wege-Katalysator, welcher in der Abgasleitung stromabwärts der Mittel installiert ist, welche die NOx absorbieren, **dadurch gekennzeichnet, dass** die Mittel, welche die NOx absorbieren, das Hinzufügen von zwei unterschiedlichen Strukturen aufweisen; eine erste Struktur, welche einen Träger und eine aktive Phase aufweist, wobei die aktive Phase auf Basis von Mangan ist und mindestens ein anderes Element A, welches aus den Alkalien und den erdalkalischen Stoffen ausgewählt ist, wobei das Mangan und das Element A chemisch verbunden sind; und eine zweite Struktur, welche einen Träger aufweist und eine aktive Phase auf der Basis von Mangan und mindestens einem anderen Element B, ausgewählt aus den Alkalien, den erdalkalischen Stoffen und den seltenen Erden, wobei diese zweite Struktur aufweist oder fähig ist aufzuweisen, eine spezifische Oberfläche von mindestens 80 m²/g nach einem Brennen über 8 Stunden bei 800° C.

2. Abgasreinigungsvorrichtung eines Verbrennungsmotors gemäß Anspruch 1, **dadurch gekennzeichnet, dass** der Träger der ersten Struktur auf Basis eines Oxids ausgewählt ist aus den Zeriumoxiden, Zirkoniumoxiden, Skandiumoxiden oder Oxiden seltener Erden.

3. Abgasreinigungsvorrichtung eines Verbrennungsmotors gemäß Anspruch 1 oder 2, **dadurch gekennzeichnet, dass** der alkalische Stoff Kalium ist, und dass der erdalkalische Stoff Barium ist.

4. Abgasreinigungsvorrichtung eines Verbrennungsmotors gemäß irgendeinem der Ansprüche 2 bis 3, **dadurch gekennzeichnet, dass** die aktive Phase der zweiten Struktur mindestens ein Element aufweist, welches ausgewählt ist aus Terbium, Gadolinium, Europium, Samarium, Neodym und Praseodym.

5. Abgasreinigungsvorrichtung eines Verbrennungsmotors gemäß Anspruch 4, **dadurch gekennzeichnet, dass** das atomare Verhältnis Zerium/Zirkonium in dem Träger der ersten Struktur mindestens 1 ist.

6. Abgasreinigungsvorrichtung eines Verbrennungsmotors gemäß irgendeinem der Ansprüche 2 bis 5, **dadurch gekennzeichnet, dass** der Träger der ersten Struktur eine spezifische Oberfläche nach einem Brennen über 6 Stunden bei 900° C von mindestens 40 m²/g aufweist.

7. Abgasreinigungsvorrichtung eines Verbrennungsmotors gemäß irgendeinem der Ansprüche 2 bis 6, **dadurch gekennzeichnet, dass** der Träger der ersten Struktur der Formel Cex-Zry-Mz-O2 entspricht, in welcher M mindestens ein Element darstellt, welches aus der Gruppe ausgewählt ist, welche Skandium und seltene Erden, unter Ausnahme von Zerium, aufweist, und in welcher 0 < z < 0,30 und noch insbesonderer 0,02 < z < 0,020 und 1 < x/y < 9 und insbesondere 1 < x/y < 9, und wobei x, y und z durch die Beziehung x + y + z = 1 verbunden sind.

8. Abgasreinigungsvorrichtung eines Verbrennungsmotors gemäß irgendeinem der Ansprüche 2 bis 7, **dadurch gekennzeichnet, dass** die seltenen Erden, welche in die Struktur des Trägers der ersten Struktur eingehen Lanthan, Neodym oder Praseodym sind.

9. Abgasreinigungsvorrichtung eines Verbrennungsmotors gemäß Anspruch 1, **dadurch gekennzeichnet, dass** die zweite Struktur eine spezifische Oberfläche von mindestens 100 m²/g nach einem Brennen über 8 Stunden bei 800° C aufweist oder fähig ist aufzuweisen.

10. Abgasreinigungsvorrichtung eines Verbrennungsmotors gemäß irgendeinem der Ansprüche 1 bis 9, **dadurch gekennzeichnet, dass** die Elemente A und B aus Kalium, Natrium oder Barium ausgewählt werden.

11. Abgasreinigungsvorrichtung eines Verbrennungsmotors gemäß irgendeinem der Ansprüche 1 bis 10, **dadurch gekennzeichnet, dass** der Träger der zweiten Struktur auf Basis von Aluminiumoxid oder einem Aluminiumoxid ist, welches durch Silizium, Zirkonium, Barium oder einer seltenen Erde stabilisiert ist.

12. Abgasreinigungsvorrichtung eines Verbrennungsmotors gemäß irgendeinem der Ansprüche 1 bis 10, **dadurch gekennzeichnet, dass** der Träger der zweiten Struktur auf Basis von Silizium ist.

13. Abgasreinigungsvorrichtung eines Verbrennungsmotors gemäß irgendeinem der Ansprüche 1 bis 10, **dadurch gekennzeichnet, dass** der Träger der zweiten Struktur auf Basis von Silizium und einem Titanoxid ist in einem atomaren Verhältnis Ti/Ti + Si zwischen 0,1 und 15%.

14. Abgasreinigungsvorrichtung eines Verbrennungsmotors gemäß irgendeinem der Ansprüche 1 bis 10, **dadurch gekennzeichnet, dass** der Träger der zweiten Struktur auf Basis eines Zeriumoxids und eines Zirkoniumoxids ist.

15. Herstellungsverfahren der Abgasreinigungsvorrichtung eines Verbrennungsmotors gemäß Anspruch 14, **dadurch gekennzeichnet, dass** der Träger der zweiten Struktur durch ein Verfahren erhalten wird, in welchem man eine Mischung bildet, die Zirkoniumoxid und Zeriumoxid enthält, und man die so gebildete Mischung wäscht oder imprägniert durch eine alkoxylierte Verbindung, welche eine Anzahl von Karbonatomen größer als 2 aufweist.

16. Herstellungsverfahren der Abgasreinigungsvorrichtung eines Verbrennungsmotors gemäß irgendeinem der Ansprüche 1 bis 10, **dadurch gekennzeichnet, dass** der Träger der zweiten Struktur auf Basis von Zeriumoxid und Zirkoniumoxid ist, wobei dieser Träger durch ein Verfahren erhalten wird, in welchem man reagieren lässt: eine Lösung eines Zeriumsalzes, eine Lösung eines Zirkoniumsalzes und ein Zusatz, welcher unter den anionischen Tensiden, den nicht-ionischen Tensiden, den Glykol-Polyethylenen, den karboxilischen Säuren und ihren Salzen auswählt, wobei die Reaktion gegebenenfalls unter Vorhandensein einer Base und/oder eines oxidierenden Wirkstoffs stattfinden kann.

## Claims

1. A device for purifying exhaust gas from an internal combustion comprising an internal combustion engine which can burn a fuel with lean air-fuel ratios, and NOₓ adsorbing means installed in the engine exhaust line, said means being of the type that adsorbs NOₓ present in the exhaust gas in the presence of excess oxygen and which releases adsorbed NOₓ when the oxygen concentration in the exhaust gas reduces, and when the engine functions with a rich mixture, the NOₓ adsorbing means comprises no composition or precious metal which could act as a NOₓ reduction catalyst, a three way catalyst is installed in the exhaust line downstream of the NOₓ adsorbing means, **characterized in that** the NOₓ adsorbing means comprise an association of two distinct compositions; a first composition comprising a support and an active phase, the active phase being based on manganese, and at least one other element A selected from alkalis and alkaline-earths, the manganese and the element A being chemically bonded; and a second composition comprising a support and an active phase based on manganese and at least one other element B selected from alkalis, alkaline-earths and rare earths, said second composition having or being capable of having a specific surface area of at least 80 m²/gafter calcining for 8 hours at 800°C.

2. A device for purifying exhaust gas from an internal combustion engine according to claim 1, **characterized in that** the support for the first composition is based on an oxide selected from oxides of cerium, zirconium, scandium or rare earths.

3. A device for purifying exhaust gas from an internal combustion engine according to claim 1 or claim 2, **characterized in that** the alkali is potassium and the alkaline-earth is barium.

4. A device for purifying exhaust gas from an internal combustion engine according to claim 2 or claim 3, **characterized in that** the active phase of the second composition comprises at least one element selected from terbium, gadolinium, europium, samarium, neodymium and praseodymium.

5. A device for purifying exhaust gas from an internal combustion engine according to claim 4, **characterized in that** the cerium/zirconium atomic proportion in the support for the first composition is at least 1.

6. A device for purifying exhaust gas from an internal combustion engine according to any one of claims 2 to 5, **characterized in that** the support for the first composition has a specific surface area of at least 40 m²/g after calcining for 6 hours at 900°C.

7. A device for purifying exhaust gas from an internal combustion engine according to any one of claims 2 to 6, **characterized in that** the support for the first composition has formula Cex-Zry-Mz-O2 in which M represents at least one element selected from the group comprising scandium and the rare earths other that cerium and in which 0 < z < 0.30 and more particularly 0.02 < z < 0.020 and 1 <x/y < 9 and still more particularly 1 < x/y < 9, x, y and z being linked by the relationship x+y+z=1.

8. A device for purifying exhaust gas from an internal combustion engine according to any one of claims 2 to 7, **characterized in that** the rare earths forming the composition of the support for the first composition is lanthanum, neodymium or praseodymium.

9. A device for purifying exhaust gas from an internal combustion engine according to claim 1, **characterized in that** the second composition has or is capable of having a specific surface area of at least 100 m²/g after calcining for 8 hours at 800°C.

10. A device for purifying exhaust gas from an internal combustion engine according to any one of claims 1 to 9, **characterized in that** the elements A and B are selected from potassium, sodium and barium.

11. A device for purifying exhaust gas from an internal combustion engine according to any one of claims 1 to 10, **characterized in that** the support for the second composition is based on alumina or alumina stabilized with silicon, zirconium, barium or a rare earth.

12. A device for purifying exhaust gas from an internal combustion engine according to any one of claims 1 to 10, **characterized in that** the support for the second composition is based on silica.

13. A device for purifying exhaust gas from an internal combustion engine according to any one of claims 1 to 10, **characterized in that** the support for the second composition is based on silica and titanium oxide in an atomic proportion Ti/Ti+Si in the range 0.1% to 15%.

14. A device for purifying exhaust gas from an internal combustion engine according to any one of claims 1 to 10, **characterized in that** the support for the second composition is based on cerium oxide and zirconium oxide.

15. A process for producing a device for purifying exhaust gas from an internal combustion engine according to claim 14, **characterized in that** the support for the second composition is obtained by a process in which a mixture comprising zirconium oxide and cerium oxide is formed and the mixture thus formed is washed or impregnated with an alkoxylated compound containing more than 2 carbon atoms.

16. A process for producing a device for purifying exhaust gas from an internal combustion engine according to any one of claims 1 to 10, **characterized in that** the support for the second composition is based on cerium oxide and zirconium oxide, said support being obtained by a process in which a solution of a cerium salt, a zirconium salt and an additive selected from anionic surfactants, non ionic surfactants, polyethylene glycols, carboxylic acids and salts thereof is reacted, the reaction optionally taking place in the presence of a base and/or an oxidizing agent.
